Europäisches Patentamt

European Patent Office

Office européen des brevets

(19)

(11) Numéro de publication: **0 057 648**
**B1**

(12) **FASCICULE DE BREVET EUROPEEN**

(45) Date de publication du fascicule du brevet: **27.12.84**

(51) Int. Cl.³: **G 21 C 17/12**

(21) Numéro de dépôt: **82400183.8**

(22) Date de dépôt: **04.02.82**

(54) **Procédé et dispositif de surveillance du déplacement des barres de contrôle d'un réacteur nucléaire.**

(30) Priorité: **04.02.81 FR 8102096**

(43) Date de publication de la demande:
**11.08.82 Bulletin 82/32**

(45) Mention de la délivrance du brevet:
**27.12.84 Bulletin 84/52**

(84) Etats contractants désignés:
**BE CH DE FR GB IT LI NL SE**

(56) Documents cités:
**DE-A-1 464 791**
**FR-A-1 514 156**
**FR-A-2 135 340**
**FR-A-2 350 578**
**FR-A-2 407 456**
**FR-A-2 447 030**
**US-A-4 090 407**

(73) Titulaire: **Framatome**
**Tour Fiat 1 place de la Coupole**
**F-92400 Courbevoie (FR)**

(72) Inventeur: **Gravelle, Alain**
**39 rue Amédée Usseglio**
**F-92350 Le Plessis Robinson (FR)**
Inventeur: **Marini, Jean**
**Chemin du Bois Martin**
**F-78160 Marly le Roi (FR)**
Inventeur: **Romy, Dominique**
**14 Rue du Roy Gontran**
**F-71100 Chalon-Sur-Saone (FR)**

(74) Mandataire: **Le Brusque, Maurice et al**
**CREUSOT-LOIRE 15 rue Pasquier**
**F-75383 Paris Cedex 08 (FR)**

Courier Press, Leamington Spa, England.

EP 0 057 648 B1

# Description

L'invention a pour objet, un nouveau procédé et un dispositif de surveillance du déplacement des barres de contrôle d'une réacteur nucléaire.

Dans les réacteurs nucléaires, notamment du type à eau sous pression, les barres de contrôle sont suspendues à des tiges qui passent dans des tubes-guides fixés sur le couvercle du réacteur et qui sont fermés eux-mêmes par un couvercle de façon à maintenir l'intégrité de l'enceinte sous pression, chaque tube étant associé à des mécanismes qui, en agissant sur la tige, permettent de remonter ou d'abaisser la barre de contrôle correspondante fixée à l'extrémité de la tige.

Il est nécessaire de pouvoir surveiller en permanence le déplacement de chaque tige de commande de façon à pouvoir déterminer exactement la position de la tige et par conséquent du crayon absorbant constituant la barre de contrôle dans l'assemblage combustible.

Le repèragede la position de la barre de contrôle ou de la tige qui la soutient doit évidemment être effectué sans contact puisqu'il se fait pendant le fonctionnement du réacteur.

Divers dispositifs ont été utilisé jusqu'à présent pour déterminer la position des barres de contrôle. On a proposé, par exemple, d'utiliser une série de capteurs électromagnétiques disposés à l'extérieur du carter du mécanisme de commande du déplacement de la barre de contrôle en association avec une partie magnétique de la barre. Ainsi, le déplacement de la barre modifie le couplage inductif entre les enroulements des capteurs et engendre une tension de sortie représentative de la position de la barre. Un tel dispositif présente l'inconvénient d'être relativement encombrant puisque les capteurs électromagnétiques doivent être disposés sur toute la hauteur du déplacement de la tige. En outre, la position de la tige ne peut pas être déterminée avec une grande précision.

Pour déterminer sans contact la position d'un élément mobile, notamment dans un réacteur nucléaire, on a également proposé d'utiliser la mesure de la variation d'amplitude d'un signal ultrasonore après sa réflexion sur l'organe dont on veut apprécier le déplacement. Cependant, du fait que la vitesse de propagation d'une onde ultrasonore varie en fonction de la température, ces méthodes ne sont valables que pour une température constants ou bien doivent intégrer une phase de correction en fonction de la température du milieu, ce qui suppose une connaissance exacte de cette dernière et introduit un facteur supplémentaire d'erreurs.

L'invention a pour objet de remédier à ces inconvénients grâce à un nouveau dispositif qui, tout en utilisant, comme le précédent, la propagation d'une onde ultrasonore, met en oeuvre un procédé de mesure qui permet de s'affranchir des variations de température.

A cet effet, on utilise, selon l'invention, les caractéristiques du mécanisme de commande employé habituellement pour déplacer les barres de contrôle.

Ce mécanisme, utilisé habituellement sur les réacteurs à eau sous pression, est du type à deux cliquets et trois bobines. Il comporte essentiellement, à l'intérieur d'un carter étanche résistant à la pression et fixé sur le couvercle de la cuve, un mécanisme de transfert, un mécanisme de maintien, et un mécanisme de levée de la tige. Chaque mécanisme est associé à une bobine magnétique située à l'extérieur du carter, dans une enveloppe de protection.

Chaque tige de commande est munie de cannelures sur une hauteur correspondant à la hauteur de déplacement de la barre de contrôle.

Le mécanisme de transfert et le mécanisme de maintien sont munis de cliquets qui s'engagent sur les cannelures de la tige.

Lorsque la barre de contrôle est en position fixe, les cliquets du mécanisme de maintien sont engagés, la bobine correspondant étant sous tension. Les deux autres bobines des mécanismes de transfert et de levée ne sont pas alimentées.

On commande l'engagement des cliquets du mécanisme de transfert en alimentant la bobine correspondante et on peut alors dégager les cliquets de maintien. La tige prend donc appui sur les cliquets de transfert en effectuant un léger déplacement vers le bas qui correspond au jeu fonctionnel existant dans le mécanisme.

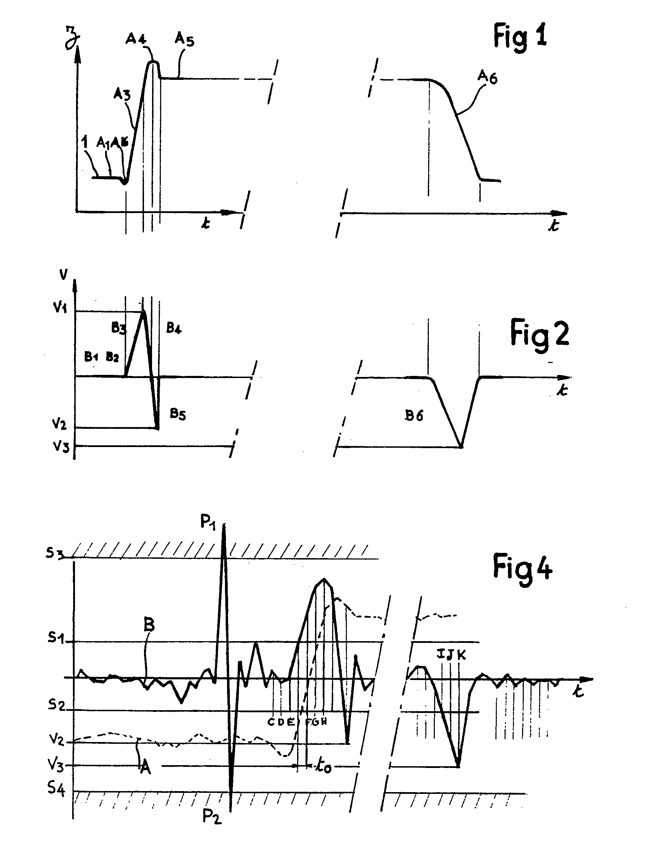

Sur la figure 1, on a représenté en fonction du temps indiqué an abscisse les variations de hauteur d'un point de la tige, indiquées en ordonnée Oz, pour un mouvement de montée d'un pas, suivi d'un mouvement de descente.

Sur la courbe A qui représente le mouvement d'un point de la tige, le léger déplacement vers le bas correspondant à l'engagement des cliquets de transfert se traduit donc par un creux A2 faisant suite au palier A1 qui correspond à la position d'appui sur les cliquets de maintien.

On alimente alors la bobine de commande du mécanisme de levée qui est constitué d'un élément mobile supportant les cliquets de transfert et se déplaçant vers le haut sur une hauteur de l'ordre de 15 mm jusqu'à ce qu'il bute sur un élément fixe. A ce moment, le cliquet de maintien est de nouveau engagé et l'on coupe lu bobine du cliquet de transfert qui se dégage puis la bobine du mécanisme de levée, l'élément mobile revenant à sa position initiale.

Le mouvement de levée de la tige, qui correspond à la partie A3 de la courbe A est un mouvement accéléré. Au moment ou l'élément mobile du mécanisme de levée vient buter contre l'élément fixe, compte-tenu de l'inertie de la tige de commande, cette dernière continue sa montée jusqu'à ce que la face inférieure de la cannelure vienne heurter la face inférieure de la dent du cliquet de maintien. Après ce premier choc, la tige de commande rebondit vers le bas et, sous l'action combinée de la pesanteur et de l'énergie restituée après le choc, vient heurter, avec un nouveau choc, la face supérieure du cliquet de transfert. Ce processus se traduit sur la ligne 1 par un pic A4, suivi d'un palier A3 correspondant à l'appui de la tige sur les cliquets de maintien.

Lorsque l'on veut descendre la tige d'un pas, on amène tout d'abord l'élément mobile du mécanisme en position haute, en alimentant la bobine correspondante. On engage à ce moment les cliquets du mécanisme de transfert et l'on dégage les cliquets de maintien. La tige descend à cet instant d'une faible hauteur qui correspond au jeu fonctionnel, puis, la bobine de levée commande la descente d'un pas de l'élément mobile supportant la tige.

La déplacement correspond à la partie A6 de la courbe A et se fait sans à-coup.

Sur la figure 2, on a représenté, en fonction du temps indiqué en abscisse, les variations de la vitesse indiquées en ordonnée. La courbe B représentant les variations de la vitesse, se compose d'un palier B1 de hauteur nulle correspondante au palier A1 de la courbe A suivi d'une partie B2 faiblement négative correspondant au léger déplacement vers le bas de la tige au moment de l'engagement des cliquets de maintien et d'un flanc de montée B3 correspondant au mouvement accéléré de levée de la tige.

Au moment où l'élément mobile du mécanisme de levée bute contre l'élément fixe, la vitesse s'annule puis devient négative, lorsque la tige de commande rebondit vers le bas, ce qui se traduit par une flanc de descente B4, et un pic négatif B5, la vitesse redevenant ensuite nulle.

Le mouvement de descente correspondant à la partie 16 de la courbe A1 se traduit par une vitesse négative qui augmente progressivement de valeur puis diminue, ce qui correspond à un pic négatif B6 de la courbe 2.

Chaque fois que la tige monte ou descend d'un pas, son déplacement se fait donc dans des conditions bien déterminées dues au fonctionnement du mécanisme et se traduit par des variations caractéristiques de la vitesse qui se reproduisent chaque fois que l'on se déplace d'un pas et qui sont différentes selon que le déplacement se produit vers le haut et vers le bas. Etant donné que chaque pas de déplacement correspond à une hauteur bien déterminée, le procédé selon l'invention de surveillance du déplacement des barres de contrôles consiste à compter le nombre de pas de déplacement de la tige dans un sens ou dans l'autre pour déduire, en fonction de la hauteur du pas, une indication sur la position de la tige et de la barre de contrôle correspondante, le procédé se caractérise en ce que l'on mesure en permanence, au moins à intervalles réguliers, la vitesse de déplacement de la tige, comptée positivement vers le haut et négativement vers le bas, on détecte les variations espacées de cette vitesse dont l'amplitude correspond à un déplacement d'un pas et l'on totalise le nombre de variations détectées en tenant compte de leur signe pour en déduire l'amplitude du déplacement dans un sens ou dans l'autre.

Pour détecter les variations de la vitesse, dans un mode de réalisation préférentiel, on fait correspondre à chaque mesure de vitesse un signal représentatif, en grandeur et en signe, de la vitesse mesurée et du sens de déplacement, on compare chaque signal à deux seuils positifs, respectivement inférieur et supérieur et à deux seuils négatifs, respectivement inférieur et supérieur, les seuils inférieurs correspondant à l'amplitude du bruit de fond, et les seuils supérieurs aux vitesses maximales possibles en déplacement normal vers le haut ou vers le bas. On compte les signaux successifs compris entre deux seuils inférieurs et supérieurs de même signe et à chaque fois que l'on a compté un nombre minimal de signaux compris entre deux seuils de même signe, on envoie une impulsion dans un compteur correspondant audit signe, le total de chaque compteur indiquant le nombre de pas du déplacement effectué vers le haut ou vers le bas selon le signe enregistré.

Pour mesurer la vitesse de déplacement de la tige, il est avantageux d'utiliser un système à ultrasons qui émet à intervalles réguliers un faisceau d'ondes ultrasonores dont on capte l'écho sur la tige en mesurant le temps de parcours de l'onde entre l'émission et la réception de l'écho; on peut alors dériver ce temps de parcours en fonction du temps réel de façon à élaborer, à la fréquence de l'émission ultrasonore, un signal analogique représentatif de la vitesse de déplacement.

De plus l'invention concerne un dispositif pour la mise en oeuvre de ce procédé.

L'invention sera mieux comprise par la description d'un exemple détaillé de mise en oeuvre illustré par les dessins annexés.

La figure 1 et la figure 2 représentent respectivement les variations de la hauteur de la tige et de la vitesse de déplacement pour des déplacements vers le haut et vers le bas.

La figure 3 représente schématiquement une tige de commande avec son dispositif de surveillance et un schéma synoptique du traitement des signaux.

La figure 4 est un diagramme représentant, en fonction du temps, un exemple de variations de la hauteur d'une tige et de sa vitesse pour un déplacement d'un pas vers le haut.

La figure 5 représente un détail de réalisation.

La figure 6 représente schématiquement une variante de montage du dispositif.

Sur la figure 3, on a représenté schématiquement la partie supérieure d'une tige 1 de commande de barres de contrôle se déplaçant à l'intérieur d'un tube 11 fixé sur le couvercle 12 de la cuve et muni, à sa partie inférieure, des mécanismes connus de déplacement pas à pas de la tige, un mécanisme de maintien 13, un mécanisme de transfert 14 et un mécanisme de levée 15.

Le tube 11 est muni à sa partie supérieure d'un couvercle 16 susceptible de résister à la pression à l'intérieur de la cuve. Sur ce couvercle 16 est placé un système à ultrasons comprenant un émetteur 17 et un récepteur 18.

L'installation de mesure comprend un dispositif émetteur récepteur 2 équipé d'un émetteur de grande puissance et d'un amplificateur à bande accordée, et d'un sélecteur de fréquence 20 permettant d'agir sur la fréquence d'émission des signaux. De la sorte, l'émetteur 17 envoie suivant l'axe du tube 11 un faisceau 21 d'ondes ultrasonores qui se réfléchit sur la partie supérieure de la tige commande 1, le faisceau réfléchi 22 étant reçu par le capteur 18.

Un dispositif 3 associé à l'émetteur récepteur 2 permet de mesurer la durée de propagation T de l'onde, c'est-à-dire le temps qui s'écoule entre le moment de l'émission d'une onde par l'émetteur 17 et le moment de la réception de son écho par le récepteur 18.

Cette durée de propagation est évidemment proportionnelle à la distance de l'extrémité de la tige 1 par rapport au couvercle 16 du tube 11, et un aurait pu se contenter de cette mesure pour surveiller le déplacement de la tige. Cependant, comme on l'a indiqué, la durée de propagation de l'onde dépend de la température qui ne donne pas une indication suffisamment précise de la position de la tige.

Chaque fois qu'une onde ultrasonore est émise par l'émetteur-récepteur 2, le dispositif 3 émet donc un signal analogique fonction de la durée T de propagation de l'onde.

A chaque signal d'amplitude T émis par le dispositif 3 on fait correspondre un signal V représentatif de la vitesse de déplacement qui est élaborée par un dispositif 4 effectuant la dérivée de la durée de propagation T par rapport au temps réel (t). Cette dérivée peut être exécutée par exemple par soustraction successive des amplitudes, le dispositif 4 étant relié à cet effet à un calculateur.

Ainsi, le dispositif 4 émet une suite de signaux d'amplitude V à des intervalles réguliers qui correspondent à la fréquence d'émission des ondes ultrasonores règlées par le sélecteur de fréquence 20. Bien entendu, cette fréquence doit être règlée en fonction de la distance de l'extrémité de la tige par rapport au couvercle 16 de telle sorte que le temps entre deux émissions successives soit toujours supérieur à la durée de propagation. En général, on utilisera une fréquence de l'ordre de 60 Hertz.

Les variations de la durée de propagation et de la vitesse de déplacement peuvent d'ailleurs être visualisées, et, sur la figure 4, on a représenté à titre d'exemple les courbes représentatives (A) du déplacement et (B) de la vitesse, en fonction du temps. Conformément à ce que l'on vient d'indiquer, chaque courbe est constituée d'une succession de points dont les abscisses sont séparées d'une distance correspondant à la fréquence d'émission.

On reconnait sur la figure 4 la forme des courbes théoriques représentées sur les figures 1 et 2 et correspondant à un déplacement de un pas vers le haut. Cependant, dans la réalité, il feut évidemment tenir compte du bruit de fond et c'est pourquoi, d'une façon générale, lorsque la tige est en appui sur les cliquets de maintien, la vitesse évolue entre deux seuils S1 et S2 respectivement positifs et négatifs.

Cependant, chaque déplacement d'un pas vers le haut produit une variation de la vitesse jusqu'à un niveau positif V supérieur à S1 et une inversion brusque jusqu'à un niveau négatif V2 inférieur à S2.

De la même façon, lorsque la tige se déplace d'un pas vers le bas, la vitesse, qui oscillait entre les deux niveaux S1 et S2 correspondant au bruit de fond augmente dans le sens négatif jusqu'à une valeur V3 (figure 2) puis redevient nulle.

D'autre part, on peut définir un niveau haut S3 et un niveau bas S4 respectivement supérieur et inférieur aux vitesses maximales positives ou négatives que peut atteindre la tige dans son déplacement vers le haut ou vers le bas.

On est sûr que les variations d'amplitude de la vitesse supérieures en valeur absolue aux niveaux S3 or S4 seront dues à des parasites et devront donc être éliminées.

Ces quatre niveaux de vitesse S1, S2, S3, S4 correspondent à quatre seuils qui sont affichés sur un dispositif de comparaison 5 qui reçoit chaque signal de vitesse émis par le dispositif de dérivation 4 et le compare aux quatre seuils affichés.

Chaque fois que le dispositif de comparaison 5 reçoit du dispositif 4 un signal de vitesse simultanément supérieur au seuil S1 et inférieur au seuil S3, il envoie une impulsion dans un système totalisateur 51. En revanche, chaque fois que le comparateur 5 enregistre un signal de vitesse négatif dont la valeur absolue est supérieure au seuil S2 et inférieure au seuil S4, il envoie une impulsion dans un totalisateur 52.

Les totalisateurs 51 et 52 sont règlée de façon à émettre une impulsion vers un compteur respectivement 61 ou 62, chaque fois qu'ils ont totalisé un nombre d'impulsions prédéterminées, par exemple trois ou quatre.

De la sorte, si l'on se reporte à la figure 4 qui donne à titre d'exemple une courbe de vitesse formée à partir de signaux émis par le dispositif de dérivation 4, et dont les différents points sont par conséquent espacés d'un intervalle t0 correspondant à la fréquence d'émission, on voit que les signaux P1 et P2, correspondant à des parasites ont été éliminés puisqu'ils sont supérieurs en valeur absolue à S3 et S4. De même, les signaux C, D, E sont considérés comme de bruit de fond.

En revanche, chaque fois qu'il reçoit l'un des signaux FGH, le comparateur 5 envoie une impulsion dans le totalisateur 51. Si celui-ci est règlé sur trois impulsions, on considère à partir du signal H que l'on a détecté à coup sûr une variation positive de vitesse correspondant à un déplacement vers le haut d'un pas et le totalisateur 51 envoie une impulsion dans un compteur 61.

A ce moment, le totalisateur 52 est neutralisé pendant un certain temps, de façon à ne pas prendre en compte les vitesses négatives qui correspondant common on l'a vu à la butée de l'élément mobile du mécanisme de levée.

Les signaux suivant, compris entre S1 et S2, ne sont pas pris en compte.

En revanche, à partir du signal I d'amplitude négative comprise entre S2 et S4, une impulsion est envoyée par le comparateur 5 au totalisateur 52.

Celui-ci après avoir reçu les impulsions correspondant aux signaux I, J, K envoie une impulsion au compteur 62, un déplacement vers le bas ayant été à coup sûr détecté.

Ainsi, les compteurs 61 et 62 indiquent le nombre de pas détectés respectivement vers le haut ou vers le bas. Compte-tenu de la hauteur d'un pas, généralement de l'ordre de 15 mm, il est facile d'en déduire la hauteur de la tige et d'ailleurs, les compteurs 61 et 62 peuvent être reliés à un dispositif d'affichage visuel prenant en compte la hauteur du pas.

Le processus de reconnaissance de la forme du signal vitesse qui vient d'être décrit peut évidemment être réalisé de différentes façons. On peut, par exemple, utiliser un système analogique de comparateurs à seuils, comme on vient de le décrire. Mais on pourrait aussi, au moyen d'un convertisseur numérique analogique, transformer en signaux numériques les signaux de mesure des durées de propagation émis par le dispositif de mesure 8 de façon à effectuer numériquement la dérivation et la comparaison par programme sur calculateur.

Le système pourrait également être complété par des dispositifs d'affichage visuel fournissant sur un écran la forme de la courbe de déplacement A et de la courbe de vitesse B. De même, les compteurs 61 et 62 pourraient commander un système d'affichage visuel des positions des barres de contrôle du réacteur.

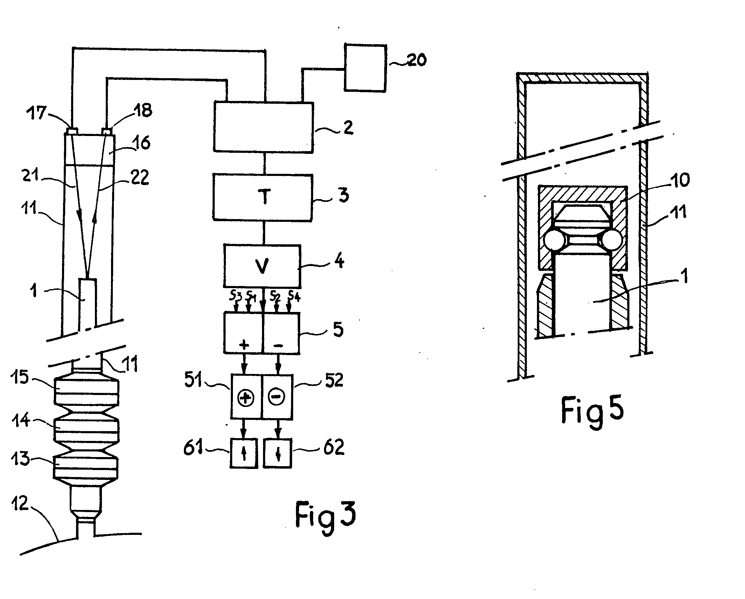

Mais l'invention pourrait également faire l'objet de bien d'autres perfectionnements ou variantes. C'est ainsi que, comme on l'a représenté sur la figure 5, la tige de commande 1 peut être munie à sa partie supérieure d'un bouchen réflecteur 10 permettant d'augmenter la quantité d'énergie réfléchie et par conséquent le rapport signal/bruit.

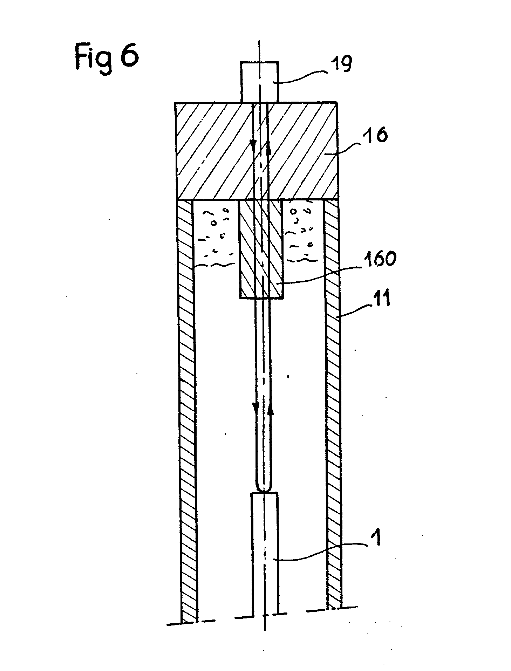

D'autre part, comme on l'a représenté sur la figure 6, le bouchon 16 peut être modifié de telle sorte que le trou de purge soit excentré ce qui permet d'utiliser un seul capteur émetteurrécepteur 19 positionné suivant l'axe de la tige. Du côté interne, le bouchon 16 peut également être prolongé par un guide d'ondes cylindrique 160 qui plonge dans le liquide de refroidissement du réacteur, et assure ainsi la transmission des ondes ultrasonores même en cas de présence d'une petite quantité de gaz en partie haute du tube 11.

On voit que, du fait que l'on ne mesure pas directement la hauteur de la tige, mais que l'on se contente de compter le nombre de pas de déplacement vers le haut ou vers le bas en surveillant l'évolution de la vitesse de déplacement par une reconnaissance de forme, les mesures n'ont pas à être corrigées en fonction de la température qui peut varier d'un ensemble de déplacement à un autre. Cependant, un peut considérer que lors d'un déplacement élémentaire, la température reste constante et que les courbes A ou B ont toutes la même forme. Il est donc possible, pour un déplacement de régler au mieux les seuils du comparateur 5 permettant de détecter les déplacements vers le haut ou vers le bas.

**Revendications**

1. Procédé de surveillance du déplacement des barres de contrôle d'un réacteur nucléaire dans lequel chaque barre de contrôle est suspendue à une tige coopérant avec un mécanisme de commande du déplacement pas à pas, vers le haut ou vers le bas, de la tige, caractérisé par le fait que l'on mesure en permanence, au moins à intervalles réguliers, la vitesse de déplacement de la tige comptée positivement vers le haut et négativement vers le bas, que l'on détecte les variations espacées de cette vitesse dont l'amplitude correspond à un déplacement d'un pas en les affectant d'un signe correspondant au sens de déplacement, et qu'on totalise le nombre de variations détectées en tenant compte de leur signe pour compter le nombre de pas de déplacement de la tige et en déduire, en fonction de la hauteur du pas, l'amplitude du déplacement dans un sens ou dans l'autre.

2. Procédé de surveillance des barres de contrôle selon la revendication 1, caractérisé par le fait que l'on fait correspondre à chaque mesure de vitesse un signal représentatif, en grandeur et en signe, de la vitesse mesurée et du sens de déplacement, que l'on compare chaque signal à deux seuils positifs, respectivement inférieur et supérieur et à deux seuils négatifs, respectivement inférieur et supérieur, les seuils inférieurs correspondant à l'amplitude du bruit de fond et les seuils supérieurs aux vitesses maximales possibles en déplacement normal vers le haut ou vers le bas, que l'on compte les signaux successifs compris entre deux seuils respectivement inférieur et supérieur de même signe et qu'à chaque fois que l'on a compté un nombre minimal de signaux compris entre deux seuils de même signe, on envoie une impulsion dans un compteur correspondant audit signe et dont le total indique le nombre de pas du déplacement effectué vers le haut ou vers le bas selon le signe enregistré.

3. Procédé de surveillance des barres de contrôle selon l'une des revendications précédentes, caractérisé par le fait que, pour mesurer la vitesse de déplacement de la tige, on émet à intervalles réguliers un faisceau d'ondes ultrasonores dont on capte l'écho sur la tige, on mesure le temps de parcours de l'onde entre l'émission et la réception de l'écho et l'on dérive ce temps de parcours en fonction du temps réel de façon à élaborer à la fréquence de l'émission ultrasonore un signal analogique représentatif de la vitesse de déplacement.

4. Dispositif de surveillance du déplacement des barres de contrôle d'un réacteur nucléaire dans lequel chaque barre de contrôle est suspendue à une tige 1 coopérant avec un mécanisme (13, 14, 15) de commande de son déplacement pas à pas, vers le haut ou vers le bas caractérisé par le fait qu'il comprend un moyen (2, 3, 4) de mesure de la vitesse de déplacement de la tige (1), un moyen (5) de repérage des variations de vitesse d'amplitude supérieure à une valeur donnée, correspondant au déplacement d'un pas et un moyen (61, 62) de comptage desdites variations en fonction de leur signe.

5. Dispositif de surveillance selon la revendication 4, caractérisé par le fait que le moyen de mesure de la vitesse de déplacement de la tige (1), comprend un dispositif émetteur-récepteur (2) d'ondes ultrasonores à fréquence donnée qui se propagent en direction de l'extrémité supérieure de la tige (1), émises par l'intermédiaire d'un émetteur (17) et reçues par un capteur (18) tous deux placés sur le tube (11) fixé sur le couvercle (12) de la cuve du réacteur et à l'intérieur duquel se déplace la tige (1), un dispositif (3) de mesure du temps de propagation de chaque onde ultrasonore après réflexion sur la tige (1) et un dispositif (4) d'établissement de la dérivée du temps de propagation mesuré en fonction du temps réel.

6. Dispositif de surveillance selon la revendication 4, caractérisé par le fait que le moyen (2, 3, 4) de mesure de la vitesse de déplacement de la tige (1) délivre à chaque mesure un signal d'amplitude et de signe fonction de la vitesse et du sens de déplacement de la tige (1) et que le moyen de repérage des variations de la vitesse est un organe (5) de comparaison du signal de vitesse à quatre seuils affichés à l'avance, deux seuils positifs respectivement bas $S_1$ et haut $S_3$ et deux seuils négatifs respectivement bas $S_2$ et haut $S_4$, ledit organe de comparaison (5) étant muni de deux sorties respectivement positive et négative pour l'émission d'une impulsion sur la sortie positive chaque fois que l'amplitude du signal de vitesse est comprise entre les seuils positifs $S_1$ et $S_3$ et sur la sortie negative chaque fois que l'amplitude du signal de vitesse est comprise entre les seuils négatifs $S_2$ et $S_4$.

7. Dispositif de surveillance selon la revendication 4 et 6, caractérisé par le fait que les impulsions émises respectivement aux sorties positive et négative de l'organe de comparaison (5) sont enregistrées dans deux totalisateurs, respectivement (51) et (52) qui émettent chacune une impulsion enregistrée dans un compteur, respectivement (61, 62) chaque fois que le nombre d'impulsion reçues atteint un seuil fixé à l'avance, le nombre d'impulsions enregistrées dans chaque compteur, respectivement (61, 62) correspondant au nombre de pas de déplacement de la tige, respectivement vers le haut ou vers le bas.

**Patentansprüche**

1. Verfahren zur Kontrolle der Steuerstabverstellung eines Kernreaktors, in welchem die Steuerstäbe an einer Stange aufgehängt sind, die mit einem Antriebsmechanismus zur schrittweisen Verstellung der Stange nach oben oder nach unten zusammenwirkt, dadurch gekennzeichnet, dass die nach oben positiv bzw. nach unten negativ ausgedrückte Bewegungsgeschwindigkeit kontinuierlich, jedoch mindestens in regelmässigen Zeit abständen gemessen wird, dass die in Zeit abständen eintretenden Schwankungen dieser Geschwindigkeit erkannt werden, deren Grösse einer Schrittbewegung entspricht, wobei diesen ein der Bewegungsrichtung entsprechendes Zeichen zugeordnet wird, und dass die Anzahl der erkannten Schwankungen unter Berücksichtigung ihres Zeichens summiert wird um die Anzahl der Bewegungsschritte der Stange festzustellen und daraus die Bewegungsgrösse in einer bzw. in der anderen Richtung entsprechend der Schrittlänge abzuleiten.

2. Verfahren zur Kontrolle der Steuerstäbe nach Anspruch 1, dadurch gekennzeichnet, dass ein die Grösse und das Zeichen der gemessenen Geschwindigkeit und Bewegungsrichtung darstellendes Signal jeder Geschwindigkeitsmessung zugeordnet wird, dass jedes Signal mit zwei positiven—jeweils darunter bzw. darüberliegenden—Schwellenwerte und mit zwei negativen—jeweils darunter- und darüberliegenden—Schwellenwerte verglichen wird, wobei die darunterliegenden Schwellenwerte der Grösse des Hintergrundrauschens und die darüberliegenden Schwellenwerte den maximal möglichen Geschwindigkeiten bei einer Normalbewegung nach oben oder nach unten entsprechen, dass die aufeinanderfolgenden zwischen zwei jeweils unteren bzw. oberen Schwellenwerte liegenden Signale mit demselben Zeichen gezählt werden, und dass jedesmal nach Zählung einer Mindestanzahl zwischen zwei Schwellenwerte mit demselben Zeichen liegenden Signale ein Impuls einem diesem Zeichen entsprechenden Zähler zugeführt wird, wobei die Summe die Schrittzahl der nach oben oder nach unten ausgeführten Bewegung entsprechend dem registrierten Zeichen darstellt.

3. Verfahren zur Kontrolle der Steuerstäbe nach einem der vorhergehenden Ansprüche, dadurch gekennzeichnet, dass zur Messung der Bewegungsgeschwindigkeit der Stange ein Bündel Ultraschallwellen in regelmässigen Zeit Abständen ausgestrahlt wird, deren Echo an der Stange empfangen wird, die Laufzeit der Welle zwischen der Sendung und dem Echoempfang gemessen wird, und diese Laufzeit entsprechend der wirklichen Zeit abgeleitet wird um somit ein die Bewegungsgeschwindigkeit darstellendes Analogsignal in der Ultraschallfrequenz auszuarbeiten.

4. Kontrollvorrichtung der Steuerstabverstellung in einem Kernreaktor, in welchem jeder Steuerstab an einer Stange 1 aufgehängt ist, die mit einem Antriebsmechanismus (13, 14, 15) zu deren schrittweisen Verstellung nach oben bzw. nach unten zusammenwirkt, dadurch gekennzeichnet, dass sie ein Mittel (2, 3, 4) zur Messung der Bewegungsgeschwindigkeit der Stange (1), ein Mittel (5) zur Feststellung der Geschwindigkeitsschwankungen mit einer über einem gegebenen Wert liegenden Grösse, die einer Schrittbewegung entspricht, und ein Mittel (61, 62) zur Zählung dieser Schwankungen entsprechend ihres Zeichens aufweist.

5. Kontrollvorrichtung nach Anspruch 4, dadurch gekennzeichnet, dass das Mittel zur Messung der Bewegungsgeschwindigkeit der Stange (1) eine Sende-Empfänger Vorrichtung (2) von Ultraschallwellen in einer gegebenen Frequenz umfasst, die sich zum oberen Ende hin der Stange (1) ausbreiten, von einem Sender (17) ausgestrahlt und von einem Empfänger (18) empfangen werden, wobei beide an dem auf dem Deckel (12) des Reaktordruckbehälters befestigten Rohrs (11) angeordnet sind, in welchem die Stange (1) verstellbar ist, sowie eine Vorrichtung (3) zur Messung der Ausbreitungszeit jeder Ultraschallwelle nach deren Rückstrahlung auf der Stange (1) und eine Vorrichtung (4) zur Bildung der Ableitung der gemessenen Ausbreitungszeit entsprechend der reellen Zeit.

6. Kontrollvorrichtung nach Anspruch 4, dadurch gekennzeichnet, dass das Mittel (2, 3, 4) zur Messung der Bewegungsgeschwindigkeit der Stange (1) bei jeder Messung ein Signal abgibt, dessen Grösse und Zeichen der Geschwindigkeit und der Bewegungsrichtung der Stange (1) entsprechen, und dass das Mittel zur Feststellung der Geschwindigkeitsschwankungen ein Geschwindigkeitssignal-Vergleichsglied (5) mit vier vorangezeigten Schwellenwerte ist, und zwar zwei positive Schwellenwerte—ein tiefliegender $S_1$ bzw. hochliegender $S_3$—und zwei negative Schwellenwerte—ein tiefliegender $S_2$ bzw. hochliegender $S_4$—wobei das Vergleichsglied (5) zwei jeweils positive bzw. negative Ausgänge aufweist zur Abgabe eines Impulses an den positiven Ausgang jedesmal wenn die Grösse des Geschwindigkeitssignals zwischen den positiven Schwellenwerte $S_1$ bzw. $S_3$ liegt und an den negativen Ausgang jedesmal wenn die Grösse des Geschwindigkeitssignals zwischen den negativen Schwellenwerte $S_2$ und $S_4$ liegt.

7. Kontrollvorrichtung nach Anspruch 4 und 6, dadurch gekennzeichnet, dass die an den jeweils positiven bzw. negativen Ausgängen des Vergleichsgliedes (5) abgegebenen Impulse in zwei Summierern (51) und (52) registriert werden, die jeweils einen in einem Zähler (61, 62) registrierten Impuls abgeben jedesmal wenn die Anzahl der empfangenen Impulse einen vorbestimmten Schwellenwert erreicht hat, wobei die Anzahl der in jedem Zähler (61, 62) registrierten Impulse der Anzahl der Bewegungsschritte der Stange jeweils nach oben bzw. nach unten entspricht.

## Claims

1. Process for monitoring the movement of the control rods of a nuclear reactor in which each control rod is suspended from a shaft cooperating with a mechanism for controlling the stepwise movement, upwards or downwards, of the shaft, characterised in that the speed of movement of the shaft, counted positively upwards and negatively downwards, is measured continually, at least at regular intervals, that the individual variations in this speed whose amplitude corresponds to a movement by one step are detected, a sign corresponding to the direction of movement being attributed to them, and that a sum is produced of the numebr of variations detected taking account of their sign to count the number of movement steps of the shaft and to deduce therefrom, as a function of the height of the step, the amplitude of the movement in one or other direction.

2. Process for monitoring control rods according to Claim 1, characterised in that to each measurement of speed there is made to correspond a signal representing, in magnitude and sign, the speed measured and the direction of movement, that each signal is compared to two positive thresholds, lower and higher respectively, and to two negative thresholds, lower and higher respectively, the lower thresholds corresponding to the amplitude of the background noise and the upper thresholds to the maximum possible speeds during normal movement upwards or downwards, that the successive signals of the same sign included between two thresholds, lower and higher respectively, are counted and that each time a minimum number of signals included between two thresholds of the same sign has been counted a pulse is sent to a counter corresponding to the said sign and the total of which shows the number of movement steps made upwards or downwards according to the sign recorded.

3. Process for monitoring control rods according to either of the preceding claims, characterised in that, to measure the speed of movement of the shaft, a beam of ultrasonic waves is transmitted at regular intervals, the echo from the shaft thereof being picked up, the travelling time of the wave between the transmission and the reception of the echo is measured and this travelling time is derived as a function of real time so as to produce, from the frequency of the ultrasonic transmission, an analog signal representing the speed of movement.

4. Device for monitoring the movement of the control rods of a nuclear reactor in which each control rod is suspended from a shaft (1) co-operating with a mechanism (13, 14, 15) for controlling its stepwise movement upwards or downwards, characterised in that it comprises a means (2, 3, 4) for measuring the speed of movement of the shaft (1), a means (5) for marking speed variations of an amplitude greater than a given value, corresponding to the movement by one step and a means (61, 62) for counting the said variations according to their sign.

5. Monitoring device according to Claim 4, characterised in that the means for measuring the speed of movement of the shaft (1) comprise a device (2) which transmits and receives ultrasonic waves at a given frequency, which propagate towards the upper end of the shaft (1), the waves being transmitted by means of a transmitter (17) and received by a sensor (18), both being placed on the tube (11) fixed on the cover (12) of the reactor vessel and inside which the shaft (1) moves, a device (3) for measuring the time of propagation of each ultrasonic wave after reflection from the shaft (1) and a device (4) for obtaining the derivative of the time of propagation measured as a function of real time.

6. Monitoring device according to Claim 4, characterised in that the means (2, 3, 4) for measuring the speed of movement of the shaft (1) produces at each measurement a signal of amplitude and sign which are a function of the speed and direction of movement of the shaft (1) and the means for marking the variations in the speed are an instrument (5) for comparing the speed signal of four predetermined thresholds, two positive thresholds, low $S_1$ and high $S_3$ respectively, and two negative thresholds, low $S_2$ and high $S_4$ respectively, the said instrument for comparison (5) being equipped with two outputs, positive and negative respectively, for transmitting a pulse at the positive output each time the amplitude of the speed signal is between the positive thresholds $S_1$ and $S_3$ and at the negative output each time the amplitude of the speed signal is between the negative thresholds $S_2$ and $S_4$.

7. Monitoring device according to Claims 4 and 6, characterised in that the pulses transmitted respectively at the positive and negative outputs of the instrument for comparison (5) are recorded in two totalling counters, (51) and (52) respectively, each of which transmits a pulse recorded in a counter, (61, 62) respectively, each time the number of pulses received reaches a predetermined threshold, the number of pulses recorded by each counter, (61, 62) respectively, corresponding to the number of steps of shaft movement, upwards or downwards respectively.

0 057 648

Fig 1

Fig 2

Fig 4

1

Fig 3

Fig 5

Fig 6